# EUROPEAN PATENT APPLICATION

(11) **EP 4 572 414 A1**
(43) Date of publication of application: **18.06.2025**
(21) Application number: 23852937.4
(22) Date of filing: 08.08.2023
(51) Int. Cl.: H04W 48/18, H04W 48/16, H04W 76/28, H04W 8/02, H04W 84/06, H04W 84/04

(54) **METHOD AND DEVICE FOR DISCONTINUOUS COVERAGE-BASED NETWORK SELECTION IN WIRELESS COMMUNICATION SYSTEM**

(30) Priority: 08.08.2022 US 202263395876 P
(71) Applicant: LG Electronics Inc., Yeongdeungpo-gu Seoul 07336 (KR)
(72) Inventor: KIM, Sunhee, Seoul 06772 (KR); KIM, Hyun Sook, Seoul 06772 (KR)
(74) Representative: Plasseraud IP
(86) International application number: PCT/KR2023/011656
(87) International publication number: WO 2024/035062

(57) **Abstract**

A method of operating a terminal in a wireless communication system may comprise the terminal connecting to a home public land mobile network (HPLMN) or a higher priority PLMN, based on the connection to the PLMN to which the terminal is connected being interrupted, performing a PLMN search having a higher priority than the PLMN to which the terminal is connected based on a higher priority PLMN search timer, and performing a connection to an available PLMN having a highest priority based on the PLMN search. Based on the terminal operating based on a satellite network, the higher priority PLMN search timer may be set by considering discontinuous coverage of the satellite network.

## Description

### Technical Field

The following description relates to a wireless communication system, and to a method and device for selecting a public land mobile network (PLMN) of a terminal based on a discontinuous coverage gap period.

### Background Art

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

In particular, as a large number of communication devices require a large communication capacity, the enhanced mobile broadband (eMBB) communication technology, as compared to the conventional radio access technology (RAT), is being proposed. In addition, not only massive machine type communications (massive MTC), which provide a variety of services anytime and anywhere by connecting multiple devices and objects, but also a communication system considering a service/user equipment (UE) sensitive to reliability and latency is being proposed. Various technical configurations for this are being proposed.

### Disclosure

### Technical Problem

The present disclosure relates to a method and device for performing PLMN selection by a terminal in a PLMN supporting discontinuous coverage in a wireless communication system.

The present disclosure relates to a method and device for indicating an HPLMN search timer by a network based on discontinuous coverage in a wireless communication system.

The present disclosure relates to a method and device for directly determining an HPLMN search timer by a terminal based on discontinuous coverage in a wireless communication system.

The present disclosure relates to a method and device for setting a priority for an HPLMN search timer based on discontinuous coverage in a wireless communication system.

Technical objects to be achieved in the present disclosure are not limited to what is mentioned above, and other technical objects not mentioned therein can be considered from the embodiments of the present disclosure to be described below by those skilled in the art to which a technical configuration of the present disclosure is applied.

### Technical Solution

As an example of the present disclosure, a method of operating a terminal in a wireless communication system may comprise the terminal connecting to a public land mobile network (HPLMN) or a higher priority PLMN, based on the connection to the PLMN to which the terminal is connected being interrupted, performing a PLMN search having a higher priority than the PLMN to which the terminal is connected based on a higher priority PLMN search timer, and performing a connection to an available PLMN having a highest priority based on the PLMN search. Based on the terminal operating based on a satellite network, the higher priority PLMN search timer may be set by considering discontinuous coverage of the satellite network.

In addition, as an example of the present disclosure, a terminal operating in a wireless communication system may comprise at least one transceiver, at least one processor, and at least one memory operably connected to the at least one processor and configured to store instructions that, when executed, cause the at least one processor to perform a specific operation. The specific operation may connect to a public land mobile network (HPLMN) or a higher priority PLMN, based on the connection to the PLMN to which the terminal is connected being interrupted, perform a PLMN search having a higher priority than the PLMN to which the terminal is connected based on a higher priority PLMN search timer, and perform a connection to an available PLMN having a highest priority based on the PLMN search. Based on the terminal operating based on a satellite network, the higher priority PLMN search timer may be set by considering discontinuous coverage of the satellite network.

In addition, as an example of the present disclosure, a method of operating a network in a wireless communication system may comprise a terminal and a higher priority PLMN performing a connection, and based on a connection to a PLMN to which the terminal is connected being interrupted, performing a connection to a higher priority PLMN through a PLMN search of the terminal based on a higher priority PLMN search timer. Based on the terminal operating based on a satellite network, the higher priority PLMN search timer may be set by considering discontinuous coverage of the satellite network.

In addition, as an example of the present disclosure, a network operating in a wireless communication system may comprise at least one transceiver, at least one processor, and at least one memory operably connected to the at least one processor and configured to store instructions that, when executed, cause the at least one processor to perform a specific operation. The specific operation may enable a terminal and an HPLMN or a higher priority PLMN to perform a connection, and based on a connection to a PLMN to which the terminal is connected being interrupted, perform a connection to a higher priority PLMN through a PLMN search of the terminal based on a higher priority PLMN search timer. Based on the terminal operating based on a satellite network, the higher priority PLMN search timer may be set by considering discontinuous coverage of the satellite network.

In addition, as an example of the present disclosure, a device may comprise at least one memory and at least one processor functionally connected to the at least one memory, wherein the at least one processor controls the device to connect to a public land mobile network (HPLMN) or a higher priority PLMN, based on the connection to the PLMN to which the terminal is connected being interrupted, perform a PLMN search having a higher priority than the PLMN to which the terminal is connected based on a higher priority PLMN search timer, and perform a connection to an available PLMN having a highest priority based on the PLMN search. Based on the terminal operating based on a satellite network, the higher priority PLMN search timer is set by considering discontinuous coverage of the satellite network.

In addition, as an example of the present disclosure, a non-transitory computer-readable medium storing at least one instruction may comprise the at least one instruction executable by a processor. The at least one instruction may control a device to connect to a public land mobile network (HPLMN) or a higher priority PLMN, based on the connection to the PLMN to which the terminal is connected being interrupted, perform a PLMN search having a higher priority than the PLMN to which the terminal is connected based on a higher priority PLMN search timer, and perform a connection to an available PLMN having a highest priority based on the PLMN search. Based on the terminal operating based on a satellite network, the higher priority PLMN search timer may be set by considering discontinuous coverage of the satellite network.

In addition, the following matters may be applied commonly.

As an example of the present disclosure, a first higher priority PLMN search timer may be set by an HPLMN operator and stored in a subscriber identification module (SIM) of the terminal, and the terminal may search for a PLMN having a higher priority than the PLMN to which the terminal is connected based on the first higher priority PLMN search timer stored in the SIM.

In addition, as an example of the present disclosure, based on the terminal operating based on the satellite network, a network may newly set and indicate a second higher priority PLMN search timer to the terminal, and the terminal may perform the PLMN search according to the second higher priority PLMN search timer based on the discontinuous coverage of the satellite network.

In addition, as an example of the present disclosure, the network may check an enhanced discontinuous reception (eDRX) of the terminal and a satellite location based on ephemeris orbital data, obtain location information of the terminal from the terminal, and newly set and indicate the second higher priority PLMN search timer to the terminal based on the ephemeris orbital data and the location information of the terminal.

In addition, as an example of the present disclosure, based on the terminal operating based on the satellite network, the terminal may set a third higher priority PLMN search timer, and the terminal may search for a PLMN having a higher priority than the PLMN to which the terminal is connected according to the third higher priority PLMN search timer based on the discontinuous coverage of the satellite network

In addition, as an example of the present disclosure, the terminal may obtain ephemeris orbital data of the satellite network through a system information block (SIB), the terminal may obtain location information of the terminal, and the terminal may obtain location information of the terminal, set the third priority PLMN search timer based on the ephemeris orbital data and the location information of the terminal and search for a PLMN having a higher priority than the PLMN to which the terminal is connected.

In addition, as an example of the present disclosure, the terminal may determine the higher priority PLMN search timer based on a priority, and the higher priority PLMN search timer may be determined based on any one of the first higher priority PLMN search timer stored in the SIM, a second higher priority PLMN search timer indicated by a network, a third higher priority PLMN search timer directly determined by the terminal and a default higher priority PLMN search timer.

In addition, as an example of the present disclosure, the priority may be set in the order of the second higher priority PLMN search timer, the third higher priority PLMN search timer, the first higher priority PLMN search timer and the default higher priority PLMN search timer.

In addition, as an example of the present disclosure, the higher priority PLMN search timer may be set to a T value, and based on the terminal attempting to connect to the PLMN through a search for another higher priority PLMN based on the higher priority PLMN search timer at a first time point and then connecting to a visited PLMN (VPLMN) and existing in the VPLMN at a second time point that is after the T value from the first time point, the terminal may perform the higher priority PLMN search at the second time point.

In addition, as an example of the present disclosure, based on the terminal entering the discontinuous coverage of the satellite network, an access stratum (AS) of the terminal may be deactivated, and based on the terminal leaving the discontinuous coverage of the satellite network, the AS of the terminal may be re-activated.

In addition, as an example of the present disclosure, the AS of the terminal may indicate the re-activation of the AS to a non-access stratum of the terminal.

In addition, as an example of the present disclosure, the terminal existing in a VPLMN may perform the higher priority PLMN search based on the AS being deactivated based on leaving the discontinuous coverage and the AS of the terminal indicating the re-activating of the AS to the NAS of the terminal.

### Advantageous Effects

The present disclosure can provide a method of performing PLMN selection by a terminal in a PLMN supporting discontinuous coverage in a wireless communication system.

The present disclosure can provide a method of indicating an HPLMN search timer by a network based on discontinuous coverage in a wireless communication system.

The present disclosure can provide a method of directly determining an HPLMN search timer by a terminal based on discontinuous coverage in a wireless communication system.

The present disclosure can provide a method of setting a priority for an HPLMN search timer based on discontinuous coverage in a wireless communication system.

Technical objects to be achieved in the present disclosure are not limited to what is mentioned above, and other technical objects not mentioned therein can be considered from the embodiments of the present disclosure to be described below by those skilled in the art to which a technical configuration of the present disclosure is applied.

It will be appreciated by persons skilled in the art that that the effects that can be achieved through the embodiments of the present disclosure are not limited to those described above and other advantageous effects of the present disclosure will be more clearly understood from the following detailed description. That is, unintended effects according to implementation of the present disclosure may be derived by those skilled in the art from the embodiments of the present disclosure.

### Description of Drawings

The accompanying drawings are provided to aid understanding of the present disclosure, and embodiments of the present disclosure may be provided together with a detailed description. However, the technical features of the present disclosure are not limited to a specific drawing, and features disclosed in each drawing may be combined with each other to constitute a new embodiment. Reference numerals in each drawing may mean structural elements.
FIG. 1 is a view showing an example of a communication system applicable to the present disclosure.
FIG. 2 is a view showing an example of a UE to which the implementation of the present disclosure is applied.
FIG. 3 is a view showing an example of functional separation of a general NG-RAN and 5^{th} generation core (5GC).
FIG. 4 is a view showing an example of a general architecture of a 5^{th} generation (5G) system.
FIG. 5 is a diagram illustrating a method of selecting a network by considering discontinuous coverage applicable to the present disclosure.
FIG. 6 is a diagram illustrating a method of performing a connection to a network based on a satellite network by a terminal applicable to the present disclosure.
FIG. 7 is a diagram illustrating a terminal operation method applicable to the present disclosure.
FIG. 8 is a diagram showing a terminal operation applicable to the present disclosure.

### Mode for Invention

Following embodiments are achieved by combination of structural elements and features of the present disclosure in a predetermined manner. Each of the structural elements or features should be considered selectively unless specified separately. Each of the structural elements or features may be carried out without being combined with other structural elements or features. Also, some structural elements and/or features may be combined with one another to constitute the embodiments of the present disclosure. The order of operations described in the embodiments of the present disclosure may be changed. Some structural elements or features of one embodiment may be included in another embodiment, or may be replaced with corresponding structural elements or features of another embodiment.

In the description of the drawings, procedures or steps which render the scope of the present disclosure unnecessarily ambiguous will be omitted and procedures or steps which can be understood by those skilled in the art will be omitted.

In the entire specification, when a certain portion "comprises" or "includes" a certain component, this indicates that the other components are not excluded, but may be further included unless specially described. The terms "unit", "-or/er" and "module" described in the specification indicate a unit for processing at least one function or operation, which may be implemented by hardware, software and a combination thereof. In addition, "a or an", "one", "the" and similar related words may be used as the sense of including both a singular representation and a plural representation unless it is indicated in the context describing the present specification (especially in the context of the following claims) to be different from this specification or is clearly contradicted by the context.

In this specification, the embodiments of the present disclosure are described with focus on the relationship of data reception and transmission between a base station and a mobile station. Herein, the base station means a terminal node of a network that performs direct communication with the mobile station. In this document, a specific operation, which is described to be performed by a base station, may be performed by an upper node of the base station in some cases.

That is, in a network consisting of a plurality of network nodes including a base station, various operations for communicating with a mobile station may be performed by the base station or network nodes other than the base station. Herein, "base station" may be replaced by such terms as "fixed station", "Node B", "eNode B(eNB)", "gNode B(gNB)", "ng-eNB", "advanced base station(ABS)", or "access point".

Also, in the embodiments of the present disclosure, "terminal" may be replaced by such terms as "user equipment(UE)", "mobile station(MS)", "subscriber station(SS)", "mobile subscriber station(MSS)", "mobile terminal" or "advanced mobile station(AMS)".

In addition, a transmission end refers to a fixed and/or mobile node that provides a data service or a voice service, and a reception end means a fixed and/or mobile node that receives a data service or a voice service. Accordingly, in the case of an uplink, a mobile station may be a transmission end, and a base station may be a reception end. Likewise, in the case of a downlink, a mobile station may be a reception end, and a base station may be a transmission end.

The embodiments of the present disclosure may be supported by standard documents disclosed in at least one of the following radio access systems: an IEEE 802 xx system, a 3rd generation partnership project (3GPP) system, a 3GPP long term evolution (LTE) system, a 3GPP 5th generation (5G) new radio (NR) system and a 3GPP2 system, and in particular, the embodiments of the present disclosure may be supported by the following documents: 3GPP TS (technical specification) 38.211, 3GPP TS 38.212, 3GPP TS 38.213, 3GPP TS 38.321, and 3GPP TS 38.331.

In addition, the embodiments of the present disclosure are applicable to another radio access system but is not limited to the above-described system. As an example, they are applicable to a system applied after a 3GPP 5G NR system and are not limited to a specific system.

That is, obvious steps and parts not described in the embodiments of the present disclosure may be described with reference to the above documents. In addition, all the terms disclosed in this document may be explained by the standard document.

Hereinafter, a preferred embodiment according to the present disclosure will be described in detail with reference to accompanying drawings. Detailed descriptions disclosed below together with accompanying drawings are intended to describe example embodiments of the present disclosure and not intended to show any sole embodiment in which a technical configuration of the present disclosure can be implemented.

In addition, specific terms used in the embodiments of the present disclosure are provided to help understand the present disclosure, and such specific terms may be used in any other modified forms without departing from the technical idea of the present disclosure.

The following technology may be applied to various radio access systems such as Code Division Multiple Access (CDMA), Frequency Division Multiple Access (FDMA), Time Division Multiple Access (TDMA), Orthogonal Frequency Division Multiple Access (OFDMA), Single Carrier Frequency Division Multiple Access (SC-FDMA) and the like.

For clarity of explanation, the descriptions below are based on a 3GPP communication system (e.g. LTE, NR and the like), but the technical idea of the present disclosure is not limited thereto. LTE may mean a technology after 3GPP TS 36.xxx Release 8. Specifically, the LTE technology after 3GPP TS 36.xxx Release 10 may be referred to as LTE-A, and the one after 3GPP TS 36.xxx Release 13 may be referred to as LTE-A pro. 3GPP NR may mean a technology after TS 38.xxx Release 15. 3GPP 6G may mean a technology after TS Release 17 and/or Release 18. "xxx' means the specific number of a standard document. LTE/NR/6G may be referred to collectively as 3GPP system.

Contents described in standard documents released earlier than the present disclosure may be referred to for the background art, terms and abbreviations used in the present disclosure. As an example, 36.xxx and 38.xxx standard documents may be referred to.

For terms, abbreviations, and other backgrounds that may be used in this document, reference may be made to the following standard document descriptions published prior to this document. In particular, terms, abbreviations, and other background technologies related to LTE/EPS (Evolved Packet System) may refer to 36.xxx series, 23.xxx series, and 24.xxx series, and NR (new radio)/5GS related terms and abbreviations and other backgrounds may refer to the 38.xxx series, 23.xxx series and 24.xxx series.

Hereinafter, the present disclosure is described based on the terms defined as above.

Three major requirement areas of 5G include (1) an enhanced mobile broadband (eMBB) area, (2) a massive machine type communication (mMTC) area, and (3) an ultra-reliable and low latency communications (URLLC) area.

Some use cases may require multiple areas for optimization, and other use case may be focused on only one key performance indicator (KPI). 5G supports these various use cases in a flexible and reliable method.

### Communication system applicable to the present disclosure

Although not limited thereto, various descriptions, functions, procedures, proposals, methods and/or operating flowcharts of the present disclosure disclosed herein may be applied to various fields requiring wireless communication/connection (e.g., 5G) between devices.

Hereinafter, more detailed illustrations will be presented with reference to drawings. In the drawings/description below, unless otherwise mentioned, the same drawing symbol may illustrate the same or corresponding hardware block, software block or functional block.

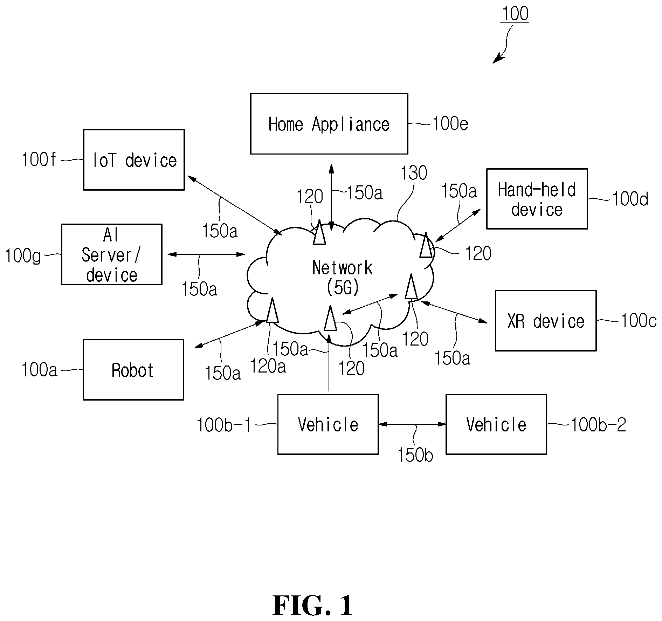

FIG. 1 is a view showing an example of a communication system applied to the present disclosure.

Referring to FIG. 1, a communication system 100 applied to the present disclosure includes a wireless device, a base station, and a network. Herein, the wireless device means a device performing communication using a wireless connection technology (e.g., 5G NR, LTE) and may be referred to as a communication/wireless/5G device. Without being limited thereto, the wireless device may include a robot 100a, vehicles 100b-1 and 100b-2, an extended reality (XR) device 100c, a hand-held device 100d, a home appliance 100e, an Internet of Thing (IoT) device 100f, and an artificial intelligence (AI) device/server 100g. For example, a vehicle may include a vehicle equipped with a wireless communication function, an autonomous driving vehicle, a vehicle capable of performing vehicle-to-vehicle communication, and the like. Herein, the vehicles 100b-1 and 100b-2 may include an unmanned aerial vehicle (UAV) (e.g., drone). The XR device 100c may include an augmented reality (AR)/virtual reality (VR)/mixed reality (MR) device and may be embodied in forms of a head-up display (HUD) installed in a vehicle, a television, a smartphone, a computer, a wearable device, a home appliance, digital signage, a vehicle, a robot, and the like. The hand-held device 100d may include a smartphone, a smart pad, a wearable device (e.g., a smart watch, smart glasses), a computer (e.g., a notebook and the like) and the like. The home appliance 100e may include a TV, a refrigerator, a washing machine, and the like. The IoT device 100f may include a sensor, a smart meter, and the like. For example, the base station 120 and the network 130 may be embodied as wireless devices, and a specific wireless device 120a may operate as a base station/network node to another wireless device.

The wireless devices 100a to 100f may be connected to the network 130 via the base station 120. AI technology may be applied to the wireless devices 100a to 100f, and the wireless devices 100a to 100f may be connected to the AI server 100g through the network 130. The network 130 may be constructed using a 3G network, a 4G(e.g., LTE) network or a 5G(e.g., NR) network. The wireless devices 100a to 100f may communicate with each other through the base station 120/the network 130 but perform direct communication (e.g., sidelink communication) not through the base station 120/the network 130. For example, the vehicles 100b-1 and 100b-2 may perform direct communication (e.g., vehicle to vehicle (V2V)/vehicle to everything (V2X) communication). In addition, the IoT device 100f (e.g., a sensor) may communicate directly with another IoT device (e.g., a sensor) or another wireless device 100a to 100f.

Wireless communication/connection 150a, 150b and 150c may be made between the wireless devices 100a to 100f/the base station 120 and the base station 120/the base station 120. Herein, wireless communication/connection may be performed through various wireless connection technologies (e.g., 5G NR) such as uplink/downlink communication 150a, sidelink communication 150b (or D2D communication), and base station-to-base station communication 150c (e.g., relay, integrated access backhaul (IAB)). A wireless device and a base station/a wireless device and a base station and a base station may transmit/receive radio signals through the wireless communication/connections 150a, 150b and 150c. For example, the wireless communication/connections 150a, 150b and 150c may transmit/receive a signal through various physical channels. To this end, based on various proposals of the present disclosure, at least a part of various processes of setting configuration information for transmission/reception of a radio signal, various processes of processing a signal (e.g., channel encoding/decoding, modulation/demodulation, resource mapping/demapping, and the like), and a resource allocation process may be performed.

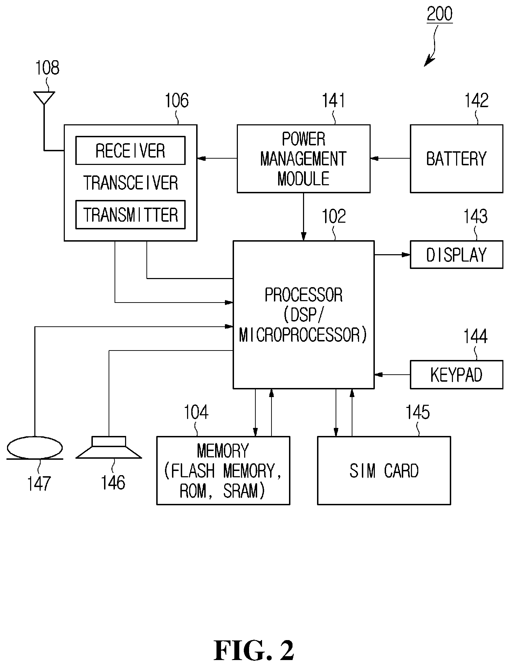

FIG. 2 is a view showing an example of a UE to which the implementation of the present disclosure is applied.

Referring to FIG. 2, a UE 200 may include a processor 202, a memory 204, a transceiver 206, one or more antennas 208, a power management module 241, a battery 242, a display 243, a keypad 244, a subscriber identification module (SIM) card 245, a speaker 246, and a microphone 247.

The processor 202 may be configured to implement a description, a function, a procedure, a proposal, a method and/or an operating flowchart disclosed in the present specification. The processor 202 may be configured to control one or more different components of the UE 200 to implement a description, a function, a procedure, a proposal, a method and/or an operating flowchart disclosed in the present specification. A layer of a wireless interface protocol may be embodied in the processor 202. The processor 202 may include an ASIC, other chipsets, a logic circuit and/or a data processing device. The processor 202 may be an application processor. The processor 202 may include at least one of a DSP, a central processing unit (CPU), a graphics processing unit (GPU), and a modem (modulator and demodulator).

The memory 204 may be coupled operably with the processor 202 and store various information for operating the processor 202. The memory 204 may include a ROM, a RAM, a flash memory, a memory card, a storage medium and/or another storage device. In case of implementation in software, a technology described herein may be implemented using a module (e.g., a procedure, a function, and the like) executing a description, a function, a procedure, a proposal, a method and/or an operating flowchart disclosed in the present specification. The module may be stored in the memory 204 and be executed by the processor 202. The memory 204 may be embodied in the processor 202 or outside the processor 202 in which case the memory 204 may be communicatively coupled with the processor 202 through various methods known in technology.

The transceiver 206 may be operably coupled with the processor 202 and transmit and/or receive a radio signal. The transceiver 206 may include a transmitter and a receiver. The transceiver 206 may include a baseband circuit for processing a radio frequency signal. The transceiver 206 may transmit and/or receive a radio signal by controlling the one or more antennas 208.

The power management module 241 may manage the power of the processor 202 and/or the transceiver 206. The battery 242 may supply power to the power management module 241.

The display 243 may output a result processed by the processor 202. The keypad 244 may receive an input to be used in the processor 202. The keypad 244 may be displayed on the display 243.

The SIM card 245 is an integrated circuit for safely storing an international mobile subscriber identity (IMSI) and a relevant key and may be used to identify and authenticate a subscriber in a hand-held telephone device like a mobile phone or a computer. In addition, contact information may be stored in many SIM cards.

The speaker 246 may output a sounded-related result processed in the processor 202. The microphone 247 may receive a sounded-related input to be used in the processor 202.

In an implement of the present specification, a UE may operate as a transmitting device in an uplink and a receiving device in a downlink. In an implement of the present specification, a base station may operate as a receiving device in a UL and a transmitting device in a DL. In the present specification, a base station may be referred to as a node B (Node B), an eNode B (eNB), and a gNB and may not be limited to a specific form.

In addition, as an example, a UE may be embodied in various forms according to a use example/service. A UE may be configured by various components, devices/parts and/or modules. For example, each UE may include a communication device, a control device, a memory device, and an addition component. A communication device may a communication circuit and a transceiver. For example, a communication circuit may include one or more processors and/or one or more memories. For example, a transceiver may include one or more transceivers and/or one or more antennas. A control device may be electrically coupled with a communication device, a memory device and an additional component and control an overall operation of each UE. For example, a control device may control an electric/mechanical operation of each UE based on a program/a code/an instruction/information stored in a memory device. A control device may transmit information stored in a memory device to the outside (e.g., another communication device) via a communication device through a wireless/wired interface or store information received from the outside (e.g., another communication device) through the wireless/wired interface in the memory device.

An additional component may be configured in various ways according to a type of a UE. For example, an additional component may include at least one of a power device/battery, an input/output (I/O) device (e.g., an audio I/O port, a video I/O port), a driving device, and a computing device. In addition, without being limited thereto, a UE may be embodied in forms of the robot 100a of FIG. 1, the vehicles 100b-1 and 100b-2 of FIG. 1, the XR device 100c of FIG. 1, the hand-held device 100d of FIG. 1, the home appliance 100e of FIG. 1, the IoT device 100f of FIG. 1, a digital broadcast terminal, a hologram device, a public safety device, an MTC device, a medical device, a fintech device (or financial device), a security device, a climate/environment device, the AI server/device 100g of FIG. 1, the base station 120 of FIG. 1, and a network node. A UE may be used a mobile or fixed place according to a use example/service.

Various components, devices/parts and/or all the modules of a UE may be connected to each other through a wired interface, or at least a part thereof may be wirelessly connected through a communication device. In addition, each component, a device/a part and/or a module of a UE may further include one or more components. For example, a control device may be configured by a set of one or more processors. As an example, a control device may be configured by a set of a communication control processor, an application processor (AP), an electronic control unit (ECU), a GPU, and a memory control processor. As anther example, a memory device may be configured by a RAM, a dynamic RAM (DRAM), a ROM, a flash memory, a volatile memory, a non-volatile memory, and/or a combination thereof.

### 5G System Architecture to which the Present Disclosure is Applicable

A 5G system is an advanced technology from 4G LTE mobile communication technology and supports a new radio access technology (RAT), extended long term evolution (eLTE) as an extended technology of LTE, non-3GPP access (e.g., wireless local area network (WLAN) access), etc. through the evolution of the existing mobile communication network structure or a clean-state structure.

The 5G system is defined based on a service, and an interaction between network functions (NFs) in an architecture for the 5G system can be represented in two ways as follows.

Reference point representation: indicates an interaction between NF services in NFs described by a point-to-point reference point (e.g., N11) between two NFs (e.g., AMF and SMF).

Service-based representation: network functions (e.g., AMF) within a control plane (CP) allow other authenticated network functions to access its services. The representation also includes a point-to-point reference point, if necessary.

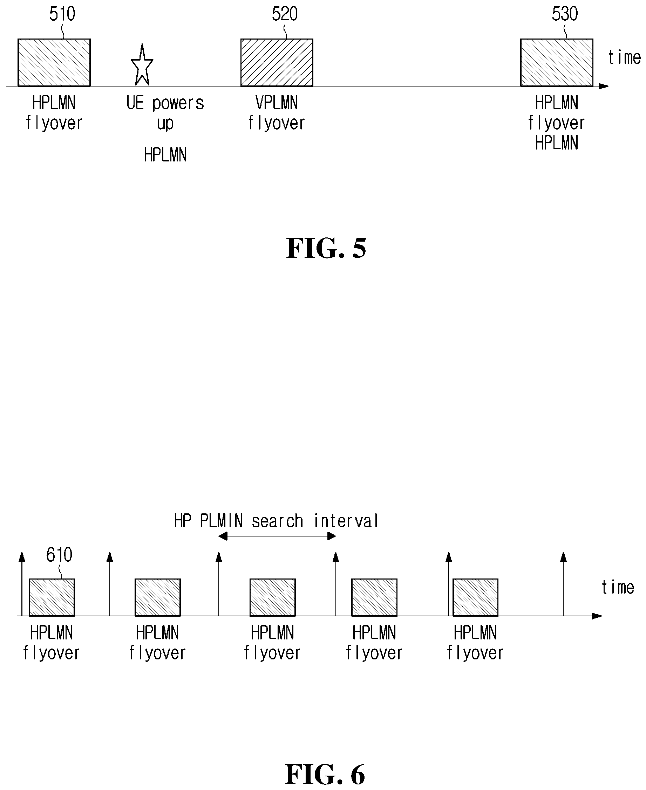

5GC (5G Core) may include various components, part of which are shown in FIG. 6, including an access and mobility management function (AMF), a session management function (SMF), a policy control function (PCF), a Prose user plane function (UPF), an application function (AF), unified data management (UDM), and a non-3GPP interworking function (N3IWF).

A UE is connected to a data network via the UPF through a next generation radio access network (NG-RAN) including the gNB. The UE may be provided with a data service even through untrusted non-3GPP access, e.g., a wireless local area network (WLAN). In order to connect the non-3GPP access to a core network, the N3IWF may be deployed.

The N3IWF performs a function of managing interworking between the non-3GPP access and the 5G system. When the UE is connected to non-3GPP access (e.g., WiFi referred to as IEEE 801.11), the UE may be connected to the 5G system through the N3IWF. The N3IWF performs control signaling with the AMF and is connected to the UPF through an N3 interface for data transmission.

The AMF may manage access and mobility in the 5G system. The AMF may perform a function of managing (non-access stratum) NAS security. The AMF may perform a function of handling mobility in an idle state.

The UPF performs a function of gateway for transmitting and receiving user data. The UPF node 440 may perform the entirety or a portion of a user plane function of a serving gateway (S-GW) and a packet data network gateway (P-GW) of 4G mobile communication.

The UPF is a component that operates as a boundary point between a next generation radio access network (NG-RAN) and the core network and maintains a data path between the gNB and the SMF. In addition, when the UE moves over an area served by the gNB, the UPF serves as a mobility anchor point. The UPF may perform a function of handling a PDU. For mobility within the NG-RAN (which is defined after 3GPP Release-15), the UPF may route packets. In addition, the UPF may also serve as an anchor point for mobility with another 3GPP network (RAN defined before 3GPP Release-15, e.g., universal mobile telecommunications system (UMTS) terrestrial radio access network (UTRAN), evolved (E)-UTRAN or global system for mobile communication (GERAN)/enhanced data rates for global evolution (EDGE) RAN. The UPF may correspond to a termination point of a data interface toward the data network.

The PCF is a node that controls an operator's policy. The AF is a server for providing various services to the UE. The UDM is a server that manages subscriber information, such as home subscriber server (HSS) of 4G mobile communication. The UDM stores and manages the subscriber information in a unified data repository (UDR).

The SMF may perform a function of allocating an Internet protocol (IP) address of the UE. In addition, the SMF may control a packet data unit (PDU) session.

For convenience of explanation, hereinafter, reference numerals may be omitted for AMF, SMF, PCF, UPF, AF, UDM, N3IWF, gNB, or UE, which may operate with reference to contents described in standard documents released earlier than the present document.

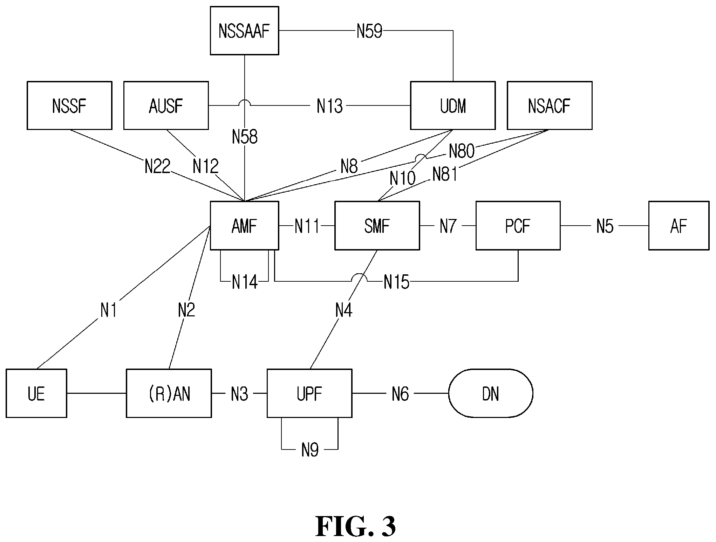

FIG. 3 is a view showing an example of expressing the structure of a wireless communication system applied to the present disclosure from a node perspective.

Referring to FIG. 3, a UE is connected to a data network (DN) through a next generation RAN. A control plane function (CPF) node performs all or a part of the functions of a mobility management entity (MME) of 4G mobile communication and all or a part of serving gateway (S-GW) and PDN gateway (P-GW) functions. The CPF node includes AMF and SMF.

A UPF node performs a function of a gateway in which data of a user is transmitted and received.

An authentication server function (AUSF) authenticates and manages a UE. A network slice selection function (NSSF) is a node for network slicing described below.

A network exposure function (NEF) provides a mechanism that safely opens the service and function of 5G core.

Reference points in FIG. 3 are described as follows. N1 represents a reference point between UE and AMF. N2 represents a reference point between (R)AN and AMF. N3 represents a reference point between (R)AN and UPF. N4 represents a reference point between SMF and UPF. N5 represents a reference point between PCF and AF. N6 represents a reference point between UPF and DN. N7 represents a reference point between SMF and PCF. N8 represents a reference point between UDM and AMF. N9 represents a reference point between UPFs. N10 represents a reference point between UDM and SMF. N11 represents a reference point between AMF and SMF. N12 represents a reference point between AMF and AUSF. N13 represents a reference point between UDM and AUSF. N14 represents a reference point between AMFs. N15 represents a reference point between PCF and AMF in a non-roaming scenario and a reference point between AMF and PCF of a visited network in a roaming scenario. N16 represents a reference point between SMFs. N22 represents a reference point between AMF and NSSF. N30 represents a reference point between PCF and NEF. N33 may represent a reference point between AF and NEF, and the above-described entity and interface may be configured with reference to contents described in standard documents released earlier than the present document.

A radio interface protocol is based on the 3GPP radio access network standard. The radio interface protocol is horizontally divided into a physical layer, a data link layer, and a network layer, and is vertically divided into a user plane for transmission of data information and a control plane for transfer of control signal (signaling).

The protocol layers may be divided into L1 (layer-1), L2 (layer-2), and L3 (layer-3) based on the three lower layers of the open system interconnection (OSI) reference model widely known in communication systems.

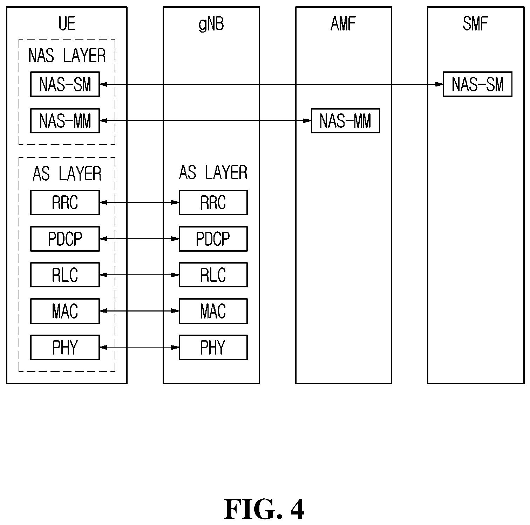

Hereinafter, the present disclosure describes each layer of a wireless protocol. FIG. 4 is a view showing an example of the structure of a radio interface protocol between a UE and a gNB.

Referring to FIG. 4, an access stratum (AS) layer may include a physical (PHY) layer, a medium access control layer, a radio link control (RLC) layer, a packet data convergence protocol (PDCP) layer, and a radio resource control (RRC) layer, and an operation based on each layer may be performed with reference to contents described standard documents released earlier than the present document.

The terminal may obtain system information broadcast from the base station and select and camp on a suitable cell. Thereafter, the terminal may obtain service-based configuration information and be connected to the network. For example, a public land mobile network (PLMN) may be composed of an MCC (mobile country code) and an MNC (mobile network code). Here, the HPLMN (home PLMN) may be a PLMN defined in the terminal, and the VPLMN (visited PLMN) may be a PLMN based on the current location of the terminal. In addition, the equivalent HPLMN may refer to a PLMN equivalent to the HPLMN, and a list may be stored in the USIM (Universal subscriber identity module) of the terminal. The terminal may select a PLMN with a high priority, and the PLMN selection may consider an automatic mode or a manual mode.

Specifically, the terminal may perform PLMN selection when it is turned on or returns from service unavailable coverage to communication possible coverage. The terminal may preferentially select the last registered PLMN or may select a PLMN in the HPLMN or equivalent HPLMN list to register it in the network. When the terminal cannot access the HPLMN or equivalent PLMN, the terminal may select another PLMN based on priority information stored in the USIM. That is, the terminal may select a PLMN based on priority information for the PLMN.

For example, when selecting a PLMN based on the automatic mode, the terminal may automatically select a PLMN based on a preset priority. Specifically, the terminal may first select a PLMN having priority in the order of HPLMN, equivalent HPLMN, equivalent HPLMN, user controlled PLMN selector with Access Technology, and operator controlled PLMN Selector with Access Technology, but may not be limited thereto. On the other hand, when performing PLMN selection based on the manual mode, the terminal may display a list of accessible PLMNs and perform connection to the selected PLMN. For example, the terminal may also select a prohibited PLMN based on the PLMN selection, and when registration is successfully performed, the corresponding PLMN may no longer be prohibited.

Also, for example, when selecting a PLMN based on roaming, the terminal may receive service from a VPLMN rather than an HPLMN. For example, the terminal may be registered in a PLMN outside the coverage of the HPLMN (e.g., another country) based on information stored in the USIM. For example, the terminal may periodically search for a Higher priority PLMN, but may not be limited thereto.

In addition, with respect to PLMN selection of a roaming terminal, Steering of Roaming (SOR) may mean that the HPLMN updates a preferred PLMN/AT (access technology) combination in the control plane. The terminal may receive a preferred PLMN/AT combination and perform PLMN selection based on the received PLMN/AT list. That is, the PLMN priority of the Operator Controlled PLMN Selector with Access Technology may be changed to the received PLMN list.

In addition, as an example, when a terminal performs a connection to a terrestrial network, the terminal may perform a connection via a fixed base station. The connection coverage cell in the terrestrial network may always be a cell with a fixed size. That is, the size of the cell in a fixed base station does not need to change dynamically and may always have a fixed size.

As another example, the terminal may perform a connection based on a non-terrestrial network. Here, the non-terrestrial network may have coverage determined based on a satellite moving along the Earth's orbit. The connection of the terminal may be disconnected based on the movement of the satellite. As an example, the terminal may not be connected to the network in discontinuous coverage based on the movement of the satellite, and the network connection may be maintained in continuous coverage. Here, the AS (access stratum) layer of the terminal may be deactivated in an interval in which the connection of the terminal is disconnected. When the AS layer of the terminal is deactivated, some NAS (non-access stratum) timers (e.g., T3412, T3346, T3396, T3447) and related procedures may be stopped. On the other hand, the back-off timer and the timer T that periodically searches for a home public land mobile network (HPLMN), an EHPLMN, or a PLMN with a high priority may operate. For example, a terminal using a RAN providing the above-described discontinuous coverage may recognize time-based coverage variation information. Here, the discontinuous coverage may be set in a non-terrestrial network, but is not limited thereto. In addition, for example, the terminal may recognize time-based coverage variation information through ephemeris data of the non-terrestrial network. Here, the terminal may deactivate the AS function to reduce power consumption in consideration of the discontinuous coverage, which will be described later.

Also, as an example, a case where the terminal is present in a VPLMN (Visited Public Land Mobile Network) may be considered. Here, if the terminal is not registered for the disaster roaming service, the terminal may attempt to access other network connections. For example, if the EHPLMN list is not present or empty, the terminal may attempt to access the HPLMN (Home PLMN). On the other hand, if the EHPLMN list is present, the terminal may perform a connection to one of the EHPLMNs.

If the EHPLMN list is empty and HPLMN access is not possible, the terminal may perform access to one of the higher priority PLMN/AT (access technology) combinations listed in the "user controlled PLMN selector" or the "operator controlled PLMN selector". Here, as an example, a timer T value may be stored in a subscriber identification module (SIM). The terminal may search for and perform access to the HPLMN, EHPLMN, or higher priority PLMN/AT based on a preset period according to the set timer T value. In addition, if the terminal sets a minimum periodic search timer (MinimumPeriodicSearchTimer), the terminal may not use a T value smaller than the minimum periodic search timer. For example, when the value stored in the SIM or the default value for T (if no value is stored) is smaller than the minimum periodic search timer, T may be set to the minimum periodic search timer.

In addition, as an example, the terminal may perform periodic PLMN selection during discontinuous coverage. As a specific example, if the terminal supports a discontinuous coverage service in a registered PLMN (RPLMN), the lower layer of the terminal may recognize that it is connected to a non-terrestrial network and may recognize the entry and exit points of discontinuous coverage. Here, the terminal may deactivate the satellite-based radio during discontinuous coverage.

For example, the lower layer of the terminal may recognize the discontinuous coverage operation of the RPLMN through the ephemeris information. When the discontinuous coverage of the RPLMN starts and stops, the lower layer of the terminal may indicate this information to the NAS layer of the terminal.

For example, if the RPLMN is a low priority PLMN, the terminal may not be able to perform PLMN selection based on the highest priority if the periodic PLMN search for the discontinuous coverage of the RPLMN is delayed.

As another example, when a non-terrestrial network is unavailable as an RPLMN, the terminal may use a higher PLMN via another terrestrial network or non-terrestrial network.

Another example is that when an RPLMN is unavailable and then becomes available again based on discontinuous coverage, the terminal may not search for a PLMN other than the RPLMN. Therefore, the terminal needs to evaluate the priority of the RPLMN before determining whether to delay the periodic PLMN selection. Here, as an example, if the RPLMN is the highest priority PLMN at the location of the terminal, the terminal may delay the periodic PLMN search. As an example, if the first PLMN in the "Operator/User Controlled PLMN Selector with Access Technology" list is a VPLMN, the terminal may delay the periodic PLMN search during the discontinuous coverage.

On the other hand, if the RPLMN is not the highest priority PLMN, the terminal may perform periodic PLMN search. For example, if the second PLMN in the "Operator/User Controlled PLMN Selector with Access Technology" list is a VPLMN, the terminal may not delay the periodic PLMN search during the discontinuous coverage. That is, the terminal needs to perform the periodic PLMN search to search for a higher priority PLMN. Here, the terminal deactivates the AS during the discontinuous coverage, but needs to activate the AS for the periodic PLMN search, which will be described later.

FIG. 5 is a diagram illustrating a method of selecting a network by considering discontinuous coverage applicable to the present disclosure.

A terminal may be in coverage for a shorter period of time in a PLMN using discontinuous coverage than in an existing network. For example, in the existing network, a PLMN that is available based on the location of the terminal may always be available, and a PLMN that is unavailable based on the location of the terminal may always be unavailable. However, in a PLMN using discontinuous coverage, whether the terminal will use the PLMN based on time may be determined. As a specific example, referring to FIG. 5, a terminal may be powered on after an HPLMH flyover 510 in continuous coverage of the HPLMN. Here, the HPLMN flyover 510 may be an interval in which the terminal may access the HPLMN. Thereafter, a VPLMN flyover 520 may occur. That is, the terminal may select a VPLMN based on the VPLMN flyover 520 that occurred before the HPLMN flyover 510. Here, the terminal may select the VPLMN and then select the HPLMN again through reselection. As another example, the terminal may not select the VPLMN and wait for the next HPLMN flyover 530, but is not limited to a specific embodiment.

FIG. 6 is a diagram illustrating a method of performing a connection to a network based on a satellite network by a terminal applicable to the present disclosure. Referring to FIG. 6, when an HPLMN uses discontinuous coverage, the terminal may select a VPLMN even though the HPLMN is available. Here, when the terminal is present in a VPLMN, an HPLMN flyover 610 using discontinuous coverage may be shorter than a higher priority PLMN search interval. Therefore, the terminal may not recognize the coverage of the HPLMN and may not perform HPLMN selection. Considering the above, the terminal needs to adjust the timer interval to recognize the HPLMN flyover 610.

As another example, when the PLMN search and selection procedure is used in a PLMN using discontinuous coverage, an optimal PLMN may not be selected. In the worst case, the terminal may not be able to select an HPLMN for a long period of time.

In consideration of the above-described points, the terminal needs to determine whether the HPLMN uses discontinuous coverage. For example, whether the HPLMN uses discontinuous coverage may be indicated in the USIM, but it may not be limited thereto. As another example, the HPLMN selection probability may be maximized when the terminal is powered on or coverage is reconstructed.

Based on the above, a method of setting an HPLMN search timer differently may be required by considering discontinuous coverage, and this will be described later.

For example, the terminal may perform communication based on satellite communication. Here, if a satellite network (or non-terrestrial network) moving along a specific orbit of the Earth is located above the terminal, the terminal may perform network connection. On the other hand, if the satellite network is not located above the terminal, the terminal may not perform network connection.

For example, when the terminal is connected to a VPLMN (visited public land mobile network), the terminal may perform an operation to search for a PLMN having a higher priority than a currently connected PLMN, as described above. That is, the terminal may search for an HPLMN (home PLMN) as a PLMN having a higher priority than the currently connected PLMN. As a specific example, the terminal may search for a PLMN having a higher priority than the PLMN of the current cell based on a preset timer T. Here, the timer T may be set by the home operator and may be stored as a fixed value in the USIM (Universal Subscriber Identity Module).

For example, when searching for a higher priority PLMN based on a satellite network moving along a specific orbit of the Earth, the terminal may search for a higher PLMN or HPLMN having a higher priority than the current PLMN only when the satellite network is present above the terminal based on the HPLMN flyover. On the other hand, the terminal cannot search for the HPLMN if there is no HPLMN flyover. Accordingly, when the terminal accesses a VPLMN and searches for the HPLMN every T time, there may be a case where the terminal fails to search for the HPLMN because the time is not a flyover of the HPLMN.

For example, a case may be considered where the terminal is present at the same location and only the satellite continuously moves along the Earth's orbit. Here, the HPLMN flyover may be a very short time (e.g., 10 minutes) based on the movement of the satellite, and the discontinuous coverage state may be a very long time (e.g., 10 hours). However, this is only one example and is not limited thereto. In the above-described situation, when the terminal performs an HPLMN search based on a T period with a preset specific timer, as in FIG. 6, when the terminal is present at a location where it may perform a connection to the HPLMN, but if it is not an HPLMN flyover, the terminal may fail to search for the HPLMN. Here, as an example, the AS (access stratum) of the terminal may be deactivated in the discontinuous coverage state based on the timer operation to prevent unnecessary power waste of the terminal.

As another example, when a terminal connected to a satellite network moves on a ship or the like, the terminal may not move along a set orbit and may move in various forms. Therefore, the discontinuous coverage based on the satellite network in the terminal may not have a fixed period or pattern. Here, when the terminal enters or leaves the discontinuous coverage state, the entry point time value and the exit point time value are based on satellite information and GPS information measured by the terminal, and only the terminal may recognize the exact time information of the actual terminal. The network may predict the time when the terminal entered or exited the discontinuous coverage state based on the information of the terminal.

Here, when the terminal is out of the discontinuous coverage of the Evolved UMTS Terrestrial Radio Access Network (E-UTRAN) satellite network, the terminal may select another inter-RAT (e.g., LTE, E-UTRAN, NR satellite network) based on the terminal capability. However, when the entire AS of the terminal is deactivated as described above, the terminal may not be able to access another RAT. In addition, even if the terminal has the capability to find a network having a higher priority than the E-UTRAN satellite network to which the terminal has accessed, the terminal may not be able to search for another network because the entire AS is deactivated based on the discontinuous coverage. That is, when the AS of the terminal is deactivated based on the discontinuous coverage, the terminal may not be able to access another network (e.g., HPLMN, EHPLMN, higher priority PLMN) until the HPLMN search is activated based on the timer T, and thus the network connection may be delayed.

As another example, even if the terminal activates the AS to search for a higher priority PLMN, the terminal may not be able to search for the HPLMN based on the HPLMN flyover. As another example, if the terminal is registered in a VPLMN and supports a different priority PLMN/AT (Access Technology), the terminal may not be able to search for the higher priority PLMN. In consideration of the above-described points, an inter-RAT PLMN selection procedure or an enhanced PLMN selection procedure may be required as a procedure for allowing the terminal to select a PLMN, and this will be described below.

As a specific example, when the higher priority PLMN search timer T described above expires, the terminal may perform a PLMN search operation having a higher priority than the current PLMN, which is the registered PLMN to which the current connection is established, as described above.

In addition, as an example, the terminal may perform a search operation for a higher priority PLMN including an HPLMN based on whether it is in discontinuous coverage based on a satellite network. Specifically, if the terminal returns to continuous coverage where a higher PLMN search is possible after deactivating an AS in the discontinuous coverage, the terminal may activate the AS and perform a search for a higher priority PLMN including an HPLMN. That is, if the terminal returns to continuous coverage where a higher priority PLMN search is possible, the terminal operates as if the timer T has expired so that the terminal may perform a search for a higher priority PLMN having a higher priority than the registered PLMN to which the terminal is currently connected. Here, the higher priority PLMN may include the HPLMN.

As another example, a higher priority PLMN search timer T may be indicated by the network. The network may set the higher priority PLMN search timer T based on the enhanced discontinuous reception (eDRX) value of the terminal and satellite location information, and may indicate this to the terminal. That is, the network may set the higher priority PLMN search timer T as a cycle time value for a new HPLMN access in the network based on ephemeris orbital data and the location information of the terminal, and may indicate this to the terminal. The terminal may perform a higher priority PLMN search based on the higher priority PLMN search timer T indicated by the network.

As another example, the terminal may directly determine the higher priority PLMN search timer T. The terminal may directly determine the periodic time value for higher priority PLMN access based on the eDRX value of the terminal itself and the ephemeris data capable of determining the satellite location information and the terminal location information. Here, the network may drive a new higher priority PLMN search timer based on the eDRX value of the terminal and the ephemeris data capable of determining the satellite location and the terminal location information. As an example, the above-described timer may be a new timer value rather than a value stored in the USIM (e.g., MinimumPeriodicSearchTimer).

Additionally, as an example, the network may indicate which higher priority PLMN search timer is used by the terminal. Here, the indication for the higher priority PLMN search timer may be indicated by the network to the terminal via a non-access stratum (NAS) message. The terminal may determine which higher priority PLMN search timer is used based on the indication.

As another example, an indication for a higher priority PLMN search timer may be provisioned in the terminal. As a specific example, the indication for a higher priority PLMN search timer may be stored in the USIM, but may not be limited thereto. Here, the terminal may determine which higher priority PLMN search timer is used based on a preset priority. As an example, the priority for the higher priority PLMN search timer may be as shown in Table 1 below, but this is only an example and may not be limited thereto.

As a specific example, the terminal may preferentially apply the higher priority PLMN search timer T indicated by the network. That is, the higher priority PLMN search timer T indicated by the network may have the highest priority. Here, if there is no higher priority PLMN search timer indicated by the network, the terminal may apply the higher priority PLMN search timer T determined directly. That is, the higher priority PLMN search timer T determined by the terminal may have the next priority. Here, if there is no higher priority PLMN search timer T indicated by the network and no higher priority PLMN search timer T determined directly by the terminal, the terminal may apply the minimum periodic search timer stored in the USIM as the higher priority PLMN search timer T. On the other hand, if there is no minimum periodic search timer, a default value may be used.

**[Table 1]**

| |
|---|
| 1. Priority 1: periodic higher priority PLMN search timer T provided by NW |
| 2. Priority 2: periodic higher priority PLMN search timer T determined by the terminal |
| 3. Priority 3: periodic higher priority PLMN search timer T present in the SIM: MinimumPeriodicSearchTimer |
| 4. When there is no value provided by NW, there is no periodic higher priority PLMN search timer value determined by the terminal, there is no minimum periodic search timer present in the SIM, a default value is used. |

In addition, as an example, when the terminal attempts to search for a higher priority PLMN as in FIG. 5 described above and then accesses a VPLMN after the next time T, the terminal may search for a higher priority PLMN at time T based on the timer and access the higher priority PLMN. Here, the terminal in the VPLMN may indicate a time point when PLMN selection is performed within continuous coverage to the terminal's NAS. In addition, as an example, if the network sets a new higher priority PLMN search timer, the network shall deliver the terminal context stored in the HPLMN through the VPLMN, and therefore, may indicate to the terminal the new higher priority PLMN search timer through the above-described SOR (steering of Roaming) procedure or UPU (UE parameter update) procedure.

For a more specific example, referring to Table 2, the terminal or the NAS of the terminal may recognize that it enters continuous coverage based on re-activation of the AS in discontinuous coverage. Here, the terminal may set the timer T described above to periodically perform PLMN search to receive service from a higher priority PLMN. For example, when the network indicates a new higher priority PLMN search timer to the terminal for discontinuous coverage by satellite, the terminal may perform PLMN selection based on the timer T indicated by the network. For example, if the terminal is present in a VPLMN after the last PLMN access attempt, the terminal may attempt PLMN connection at time T based on the timer described above.

On the other hand, when the network does not indicate to the terminal a new higher priority PLMN search timer for discontinuous coverage by satellites, and the terminal directly determines the higher priority PLMN search timer based on the measured location information of the terminal and the ephemeris orbital data of the network obtained through the system information block (SIB), the terminal may perform PLMN selection based on the directly determined timer T. For example, when the terminal is present in the VPLMN after the last PLMN access attempt, the terminal may attempt to access the PLMN at time T based on the above-described timer.

As another example, when the network does not indicate to the terminal a new higher priority PLMN search timer for discontinuous coverage by satellites, and the terminal may not directly determine the higher priority PLMN search timer based on the measured location information of the terminal and the ephemeris orbital data of the network obtained through SIB, the terminal may perform PLMN selection based on the minimum periodic search timer stored in the USIM. On the other hand, if the minimum periodic search timer is not present, the terminal may perform PLMN selection based on the default value.

| |
|---|
| Once the UE NAS layer or UE considers that it enters continuous coverage by re-activate AS layer after discontinuous coverage, it shall attempt to obtain service on a higher priority PLMN as if timer T that controls periodic attempts has expired. |
| If the NW indicates to the UE the new periodic HPLMN search timer for satellite due to discontinuous coverage, the timer T that controls periodic attempts shall be set to "the new periodic HPLMN search timer for satellite due to discontinuous coverage" indicated by NW. The MS shall make the following attempts if the MS is on the VPLMN at time T after the last attempt. |
| If the NW does not indicates to the UE the new periodic HPLMN search timer for satellite due to discontinuous coverage and if the UE can determine the UE the new periodic HPLMN search timer for satellite due to discontinuous coverage based on measurement of UE's location information and the NW's ephemeris orbital data from SIB, the timer T that controls periodic attempts shall be set to "the new periodic HPLMN search timer for satellite due to discontinuous coverage" determined by the UE. The MS shall make the following attempts if the MS is on the VPLMN at time T after the last attempt. |
| If NW does not indicate the new periodic HPLMN search timer for satellite due to discontinuous coverage nor if the UE is not able to determine the UE the new periodic HPLMN search timer for satellite due to discontinuous coverage based on measurement of UE's location and the NW's ephemeris orbital data, the timer T that controls periodic attempts shall be set to |
| 1) MinimumPeriodicSearchTimer in SIM, if any |
| 2) Otherwise, default value. |

Also, as an example, referring to Table 3, when a minimum periodic search timer is set for a terminal in a VPLMN, the terminal may not use a timer value smaller than the minimum periodic search timer. For example, when a value stored in the SIM or a default value for the timer T is smaller than the minimum periodic search timer, the timer T may be set as the minimum periodic search timer.

Here, as an example, if the HPLMN sets a higher priority PLMN search timer in the terminal for satellite-based discontinuous coverage, the timer T may control the access attempt period through the higher priority PLMN search timer provided by the higher priority PLMN. On the other hand, if the HPLMN does not set a new higher priority PLMN search timer in the terminal for discontinuous coverage by satellites and the terminal directly determines the higher priority PLMN search timer based on the measured location information of the terminal and the ephemeris orbital data of the network obtained through SIB, the timer T may control the access attempt period through the higher priority PLMN search timer directly determined by the terminal.

**[Table 3]**

| |
|---|
| If the MS is configured with the MinimumPeriodicSearchTimer as specified in 3GPP TS 24.368 [50] or 3GPP TS 31.102 [40], the MS shall not use a value for T that is less than the MinimumPeriodicSearchTimer. If the value stored in the SIM, or the default value for T (when no value is stored in the SIM), is less than the MinimumPeriodicSearchTimer, then T shall be set to the MinimumPeriodicSearch Timer. |
| If the HPLMN configures the "Timer T for new periodic HPLMN search timer for satellite due to discontinuous coverage" to the UE, the timer T that controls periodic attempts shall be set to "Timer T for the new periodic HPLMN search timer for satellite due to discontinuous coverage" provided by HPLMN. |
| If " Timer T for the new periodic HPLMN search timer for satellite due to discontinuous coverage" is not configured by HPLMN and if the UE can determine the UE the new periodic HPLMN search timer for satellite due to discontinuous coverage based on measurement of UE's location information and the NW's ephemeris orbital data from SIB, the timer T that controls periodic attempts shall be set to " Timer T for the new periodic HPLMN search timer for satellite due to discontinuous coverage" determined bv the UE. |

Also, as an example, referring to Table 4, a case may be considered where the terminal attempts to access one of the HPLMN, EHPLMN or higher priority PLMN in a VPLMN. Here, when the terminal is roaming and there is no configuration related to emergency service, the terminal may attempt to access based on an automatic mode. In addition, when the terminal is present in the VPLMN and the T timer has expired since the last access, the terminal may attempt to access to receive a service from the higher priority PLMN. Specifically, when the terminal is present in the VPLMN and the higher priority PLMN search timer T for discontinuous coverage of satellite NG-RAN or satellite E-UTRAN has expired, the terminal may attempt to access to receive a service from the higher priority PLMN.

In addition, for example, if a higher priority PLMN search timer T for discontinuous coverage of satellite NG-RAN or satellite E-UTRAN is not set, and the terminal returns to NG-RAN satellite coverage or satellite E-UTRAN coverage after the discontinuous coverage and the AS is re-activated and the AS indicates it to the NAS of the terminal, the terminal may, but is not limited to, consider the timer T to have expired at that point and attempt to access to receive a service from the higher priority PLMN.

| |
|---|
| The attempts to access the HPLMN or an EHPLMN or higher priority PLMN shall be as specified below: |
| a) The periodic attempts shall only be performed in automatic mode when the MS is roaming, and not while the MS is attached for emergency bearer services, is registered for emergency services, has a PDU session for emergency services or has a PDN connection for emergency bearer services; |
| b) The MS shall make the first attempt after a period of at least 2 minutes and at most T minutes: |
| - only after switch on if Fast First Higher priority PLMN search is disabled; or |
| - after switch on or upon selecting a VPLMN if Fast First Higher priority PLMN search is enabled. |
| c) The MS shall make the following attempts if the MS is on the VPLMN at time T after the last attempt; |
| EXCEPTION: If the MS is on the VPLMN and if the "Timer T for new periodic HPLMN search timer for satellite NG-RAN or satellite E-UTRAN due to discontinuous coverage" has expired, it shall attempt to obtain service on a higher priority PLMN. |
| EXCEPTION: The MS shall attempt to obtain service on a higher priority PLMN as specified in clause 4.4.3.3 by acting as if timer T that controls periodic attempts has expired, if; |
| 1) the "Timer T for new periodic HPLMN search timer for satellite NG-RAN or satellite E-UTRAN due to discontinuous coverage" is not configured: and |
| 2) the MS is on the VPLMN when the access stratum is re-activated because the UE next returns to satellite NG-RAN coverage or satellite E-UTRAN coverage after discontinuous coverage if the UE AS layer indicates return to coverage to UE NAS layer. |

Also, as an example, referring to Table 5, in the SOR procedure, the HPLMN may perform an update for the new UE context of the terminal based on the NAS signaling. Here, as an example, the higher priority PLMN search timer T for discontinuous coverage of the satellite NG-RAN or satellite E-UTRAN may be considered with the NAS signaling below, as described above. That is, the HPLMN may perform an update based on the higher priority PLMN search timer T described above.

Specifically, the HPLMN may provide a new higher priority PLMN search timer to the terminal based on the operator policy, the measured location information of the terminal and the ephemeris orbital information of the network for discontinuous coverage of the satellite NG-RAN or the satellite E-UTRAN. Here, the new higher priority PLMN search timer for discontinuous coverage of the satellite NG-RAN or the satellite E-UTRAN may control the timing for the HPLMN to attempt access to the HPLMN or higher priority PLMNs/AT combinations, but is not limited thereto.

**[Table 5]**

| |
|---|
| The purpose of the control plane solution for steering of roaming in 5GS procedure in a PLMN is to allow the HPLMN to update one or more of the following via NAS signalling: |
| a) the "Operator Controlled PLMN Selector with Access Technology" list in the UE by providing the HPLMN protected list of preferred PLMN/access technology combinations or a secured packet; |
| b) the SOR-CMCI; and |
| c) the SOR-SNPN-SI associated with the selected PLMN subscription in the ME; and |
| d) the "Timer T for new periodic HPLMN search timer for satellite NG-RAN or satellite E-UTRAN due to discontinuous coverage". |
| If the selected PLMN is a VPLMN, the HPLMN can provide the steering of roaming information to the UE using the control plane mechanism during and after registration. If the selected PLMN is the HPLMN, the HPLMN can provide the steering of roaming information to the UE using the control plane mechanism after registration only. The HPLMN updates the "Operator Controlled PLMN Selector with Access Technology" based on the operator policies, which can be based on the registered VPLMN, the location of the UE, etc. |
| The HPLMN can also provide the "Timer T for new periodic HPLMN search timer for satellite NG-RAN or satellite E-UTRAN due to discontinuous coverage" based on the operator policies and measurement of UE's location information and the NW's ephemeris orbital information. The "Timer T for new periodic HPLMN search timer for satellite NG-RAN or satellite E-UTRAN due to discontinuous coverage" enables the HPLMN to control the timing of attempt to obtain service on its HPLMN or a higher priority PLMN/access technology combinations for satellite NG-RAN or satellite E-UTRAN due to discontinous coverage. |

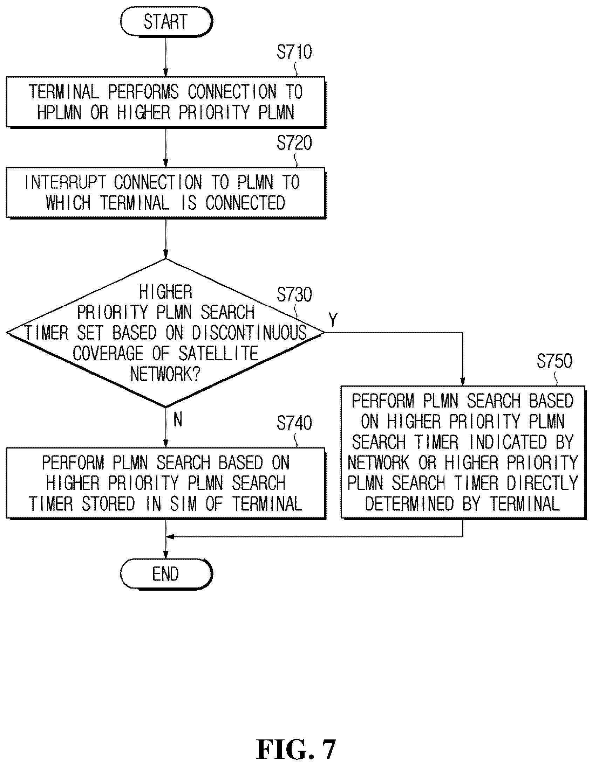

FIG. 7 is a diagram illustrating a terminal operation method applicable to the present disclosure. Referring to FIG. 7, a terminal may perform a connection to an HPLMN or a higher priority PLMN. (S710) Thereafter, the connection to the PLMN to which the terminal is connected may be interrupted. (S720) For example, the connection to the HPLMN may be interrupted when the terminal leaves the area of the HPLMN or for other reasons. If the connection to the PLMN to which the terminal is connected is interrupted, the terminal may perform a search for another higher priority PLMN based on a higher priority PLMN search timer. Thereafter, the terminal may perform a connection to a higher priority PLMN based on the PLMN search. Here, as an example, the terminal may perform different operations based on whether a higher priority PLMN search timer is set based on discontinuous coverage of a satellite network (S730). As an example, if the higher priority PLMN search timer is not set based on discontinuous coverage of the satellite network (S730), the terminal may perform a higher priority PLMN search based on the higher priority PLMN search timer stored in the SIM of the terminal (S740). That is, when the terminal performs a higher priority PLMN search because the HPLMN connection based on the existing terrestrial network is interrupted, the terminal may perform a PLMN search having a higher priority than the currently connected PLMN through the higher priority PLMN search timer stored in the SIM of the terminal. On the other hand, if a higher priority PLMN search timer is set based on the discontinuous coverage of the satellite network (S730), the terminal may perform a PLMN search based on the higher priority PLMN search timer indicated by the network or the higher priority PLMN search timer directly determined by the terminal (S750). That is, when the HPLMN operates based on the satellite network and the terminal may not perform network connection in the discontinuous coverage, the terminal may use the higher priority PLMN search timer indicated by the network or the higher priority PLMN search timer determined directly. Here, as an example, the network may check the enhanced discontinuous reception (eDRX) of the terminal and satellite location based on ephemeris orbital data. In addition, the network may obtain location information of the terminal from the terminal, and newly set a higher priority PLMN search timer based on the ephemeris orbital data and the location information of the terminal and indicate it to the terminal.

As another example, when a terminal operates based on a satellite network, the terminal may obtain ephemeris orbital data for the satellite network through an SIB, directly obtain location information of the terminal, and then directly set a higher priority PLMN search timer based on the ephemeris orbital data and location information of the terminal.

As another example, the terminal may determine a higher priority PLMN search timer based on the priority. For example, the terminal may determine the priority in the order of a higher priority PLMN search timer indicated by the network, a higher priority PLMN search timer directly determined by the terminal, an HPLMN search timer stored in the SIM of the terminal, and a default HPLMN search timer, as described above.

As another example, the higher priority PLMN search timer may be set to a T value. Here, when the terminal attempts to connect to the HPLMN through a higher PLMN search based on the higher priority PLMN search timer at a first time point and then connects to a VPLMN (visited PLMN) and exists in the VPLMN at a second time point that is after the T value from the first time point, the terminal may perform an HPLMN search at the second time point.

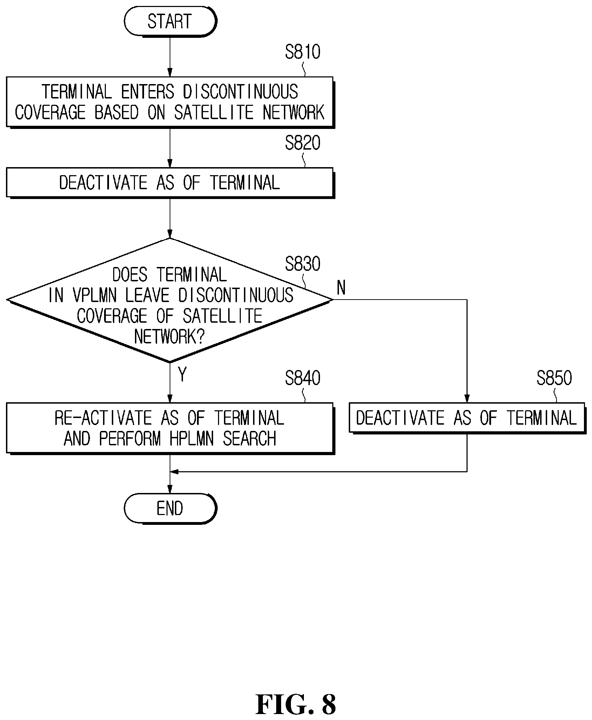

FIG. 8 is a diagram showing a terminal operation applicable to the present disclosure. Referring to FIG. 8, the terminal may support a satellite network service and receive a service based on a satellite network. Here, when the terminal enters discontinuous coverage based on the satellite network (S810), the terminal may deactivate the AS of the terminal (S820). Thereafter, when the terminal leaves the discontinuous coverage of the satellite network, the AS of the terminal may be re-activated. Here, the AS of the terminal may indicate to the NAS of the terminal information indicating whether the AS is activated. That is, the terminal may deactivate the AS in order to reduce unnecessary power consumption in discontinuous coverage based on the satellite network.

For example, a case may be considered where a terminal exists in a VPLMN and an AS is deactivated based on discontinuous coverage. Here, when the terminal leaves the discontinuous coverage and activates the AS (S830), the terminal may re-activate the AS and perform a higher priority PLMN search (S840). Specifically, when the terminal exists in a VPLMN and leaves the discontinuous coverage and the AS is re-activated, the terminal may operate as if the higher priority PLMN search timer has expired to perform a PLMN search with a higher priority than the PLMN to which the terminal is connected. Through this, the terminal may search for another PLMN with a higher priority at the time when the AS is re-activated, as described above. On the other hand, if a terminal existing in a VPLMN maintains discontinuous coverage of a satellite network (S830), the terminal may maintain the AS deactivation state, as described above (S850).

As the examples of the proposal method described above may also be included in one of the implementation methods of the present disclosure, it is an obvious fact that they may be considered as a type of proposal methods. In addition, the proposal methods described above may be implemented individually or in a combination (or merger) of some of them. A rule may be defined so that information on whether or not to apply the proposal methods (or information on the rules of the proposal methods) is notified from a base station to a terminal through a predefined signal (e.g., a physical layer signal or an upper layer signal).

The present disclosure may be embodied in other specific forms without departing from the technical ideas and essential features described in the present disclosure. Therefore, the above detailed description should not be construed as limiting in all respects and should be considered as an illustrative one. The scope of the present disclosure should be determined by rational interpretation of the appended claims, and all changes within the equivalent scope of the present disclosure are included in the scope of the present disclosure. In addition, claims having no explicit citation relationship in the claims may be combined to form an embodiment or to be included as a new claim by amendment after filing.

### Industrial Applicability

The embodiments of the present disclosure are applicable to various radio access systems. Examples of the various radio access systems include a 3^{rd} generation partnership project (3GPP) or 3GPP2 system.

The embodiments of the present disclosure are applicable not only to the various radio access systems but also to all technical fields, to which the various radio access systems are applied. Further, the proposed methods are applicable to mmWave and THzWave communication systems using ultrahigh frequency bands.

Additionally, the embodiments of the present disclosure are applicable to various applications such as autonomous vehicles, drones and the like.

## Claims

1. A method of operating a terminal in a wireless communication system, the method comprising:
connecting, by the terminal, to a home public land mobile network (HPLMN) or a higher priority PLMN;
based on the connection to the PLMN to which the terminal is connected being interrupted, performing, by the terminal, a PLMN search having a higher priority than the PLMN to which the terminal is connected based on a higher priority PLMN search timer; and
performing a connection to an available PLMN having a highest priority based on the PLMN search,
wherein based on the terminal operating based on a satellite network, the higher priority PLMN search timer is set by considering discontinuous coverage of the satellite network.

2. The method of claim 1, wherein a first higher priority PLMN search timer is set by an HPLMN operator and stored in a subscriber identification module (SIM) of the terminal, and the terminal searches for a PLMN having a higher priority than the PLMN to which the terminal is connected based on the first higher priority PLMN search timer stored in the SIM.

3. The method of claim 2,
wherein based on the terminal operating based on the satellite network, a network newly sets a second higher priority PLMN search timer and indicates the second higher priority PLMN search timer to the terminal, and
wherein the terminal performs the PLMN search according to the second higher priority PLMN search timer based on the discontinuous coverage of the satellite network.

4. The method of claim 3,
wherein the network:
checks an enhanced discontinuous reception (eDRX) of the terminal and a satellite location based on ephemeris orbital data,
obtains location information of the terminal from the terminal, and
newly sets the second higher priority PLMN search timer based on the ephemeris orbital data and the location information of the terminal and indicates the second higher priority PLMN search timer to the terminal.

5. The method of claim 2,
wherein based on the terminal operating based on the satellite network, the terminal sets a third higher priority PLMN search timer, and
wherein the terminal searches for a PLMN having a higher priority than the PLMN to which the terminal is connected according to the third higher priority PLMN search timer based on the discontinuous coverage of the satellite network.

6. The method of claim 5,
wherein the terminal obtains ephemeris orbital data of the satellite network through a system information block (SIB),
wherein the terminal:
obtains location information of the terminal, and
sets the third priority PLMN search timer based on the ephemeris orbital data and the location information of the terminal and searches for a PLMN having a higher priority than the PLMN to which the terminal is connected.

7. The method of claim 2,
wherein the terminal determines the higher priority PLMN search timer based on a priority, and
wherein the higher priority PLMN search timer is determined based on any one of the first higher priority PLMN search timer stored in the SIM, a second higher priority PLMN search timer indicated by a network, a third higher priority PLMN search timer directly determined by the terminal and a default higher priority PLMN search timer.

8. The method of claim 7, wherein the priority is set in the order of the second higher priority PLMN search timer, the third higher priority PLMN search timer, the first higher priority PLMN search timer and the default higher priority PLMN search timer.

9. The method of claim 1,
wherein the higher priority PLMN search timer is set to a T value, and
wherein based on the terminal attempting to connect to the PLMN through a search for another higher priority PLMN based on the higher priority PLMN search timer at a first time point and then connecting to a visited PLMN (VPLMN) and existing in the VPLMN at a second time point that is after the T value from the first time point, the terminal performs the higher priority PLMN search at the second time point.

10. The method of claim 1,
wherein based on the terminal entering the discontinuous coverage of the satellite network, an access stratum (AS) of the terminal is deactivated, and
wherein based on the terminal leaving the discontinuous coverage of the satellite network, the AS of the terminal is re-activated.

11. The method of claim 10, wherein the AS of the terminal indicates the re-activation of the AS to a non-access stratum of the terminal.

12. The method of claim 11, wherein the terminal existing in a VPLMN performs the higher priority PLMN search based on the AS being deactivated based on leaving the discontinuous coverage and the AS of the terminal indicating the re-activating of the AS to the NAS of the terminal.

13. A terminal operating in a wireless communication system, comprising:
at least one transceiver;
at least one processor; and
at least one memory operably connected to the at least one processor and configured to store instructions that, when executed, cause the at least one processor to perform a specific operation,
wherein the specific operation:
connects to a home public land mobile network (HPLMN) or a higher priority PLMN; based on the connection to the PLMN to which the terminal is connected being interrupted, performs a PLMN search having a higher priority than the PLMN to which the terminal is connected based on a higher priority PLMN search timer; and
performs a connection to an available PLMN having a highest priority based on the PLMN search,
wherein based on the terminal operating based on a satellite network, the higher priority PLMN search timer is set by considering discontinuous coverage of the satellite network.

14. A method of operating a network in a wireless communication system, the method comprising:
a terminal and a higher priority PLMN performing a connection; and
based on a connection to a PLMN to which the terminal is connected being interrupted, performing a connection to a higher priority PLMN through a PLMN search of the terminal based on a higher priority PLMN search timer,
wherein based on the terminal operating based on a satellite network, the higher priority PLMN search timer is set by considering discontinuous coverage of the satellite network.

15. A network operating in a wireless communication system, comprising:
at least one transceiver;
at least one processor; and
at least one memory operably connected to the at least one processor and configured to store instructions that, when executed, cause the at least one processor to perform a specific operation,
wherein the specific operation:
enables a terminal and an HPLMN or a higher priority PLMN to perform a connection; and
based on a connection to a PLMN to which the terminal is connected being interrupted, performs a connection to a higher priority PLMN through a PLMN search of the terminal based on a higher priority PLMN search timer,
wherein based on the terminal operating based on a satellite network, the higher priority PLMN search timer is set by considering discontinuous coverage of the satellite network.

16. A device comprising at least one memory and at least one processor functionally connected to the at least one memory, wherein the at least one processor controls the device to:
connect to a public land mobile network (HPLMN) or a higher priority PLMN;
based on the connection to the PLMN to which the terminal is connected being interrupted, perform a PLMN search having a higher priority than the PLMN to which the terminal is connected based on a higher priority PLMN search timer; and
perform a connection to an available PLMN having a highest priority based on the PLMN search,
wherein based on the terminal operating based on a satellite network, the higher priority PLMN search timer is set by considering discontinuous coverage of the satellite network.

17. A non-transitory computer-readable medium storing at least one instruction, the non-transitory computer-readable recording medium comprising the at least one instruction executable by a processor,
wherein the at least one instruction controls a device to:
connect to a home public land mobile network (HPLMN) or a higher priority PLMN;
based on the connection to the PLMN to which the terminal is connected being interrupted, perform a PLMN search having a higher priority than the PLMN to which the terminal is connected based on a higher priority PLMN search timer; and
perform a connection to an available PLMN having a highest priority based on the PLMN search,
wherein based on the terminal operating based on a satellite network, the higher priority PLMN search timer is set by considering discontinuous coverage of the satellite network.
